# EUROPEAN PATENT APPLICATION

(11) **EP 4 589 751 A1**
(43) Date of publication of application: **23.07.2025**
(21) Application number: 23865105.3
(22) Date of filing: 31.07.2023
(51) Int. Cl.: H01M 50/367, H01M 50/204, H01M 50/209, H01M 50/227, H01M 50/317, H01M 50/383

(54) **BATTERY PACK**

(30) Priority: 16.09.2022 JP 2022148386
(71) Applicant: Panasonic Energy Co., Ltd., Osaka 570-8511 (JP)
(72) Inventor: KURIHARA, Hidemi, Kadoma-shi, Osaka 571-0057 (JP)
(74) Representative: Novagraaf International SA
(86) International application number: PCT/JP2023/027913
(87) International publication number: WO 2024/057745

(57) **Abstract**

A battery pack is provided which prevents flame from coming out from a lateral face of an outer covering case. Battery pack 100 includes: one or more secondary battery cells 1 each of which includes an outer covering can that includes a portion including a safety valve; outer covering case 10 that is formed of resin and configured to house secondary battery cells **1,** outer covering case 10 including a first face and a second face intersecting the first face; heat-resistant plate 40 disposed on an inner side of the first face of outer covering case 10 to oppose the safety valve of each of secondary battery cells 1; and bent piece 50 that includes first piece 51 and second piece 52 connected to first piece 51. Second piece 52 is bent relative to first piece 51. **In a** state where bent piece 50 is disposed at an end portion of heat-resistant plate 40, first piece 51 opposes the first face and second piece 52 opposes the second face.

## Description

### TECHNICAL FIELD

The present disclosure relates to a battery pack.

### BACKGROUND ART

In order to drive an electrical device by using rechargeable secondary batteries, such as lithium-ion secondary batteries, a battery pack that includes an outer covering case, in which secondary battery cells are housed, is used (for example, Patent Literature (PTL) 1). In such a battery pack, each secondary battery cell includes a safety valve to exhaust high-temperature and high-pressure gas from the outer covering can when some kind of abnormality occurs and the internal pressure of the outer covering can increases. For example, a secondary battery cell with a cylindrical outer covering can generally includes a safety valve on a cylindrical end face. In a battery pack that includes such secondary battery cells, when the safety valve is opened and high-temperature and high-pressure gas is ejected from a secondary battery cell and even when the gas ignites and flame is generated, it is desirable to prevent the flame from coming out of the outer covering case of the battery pack.

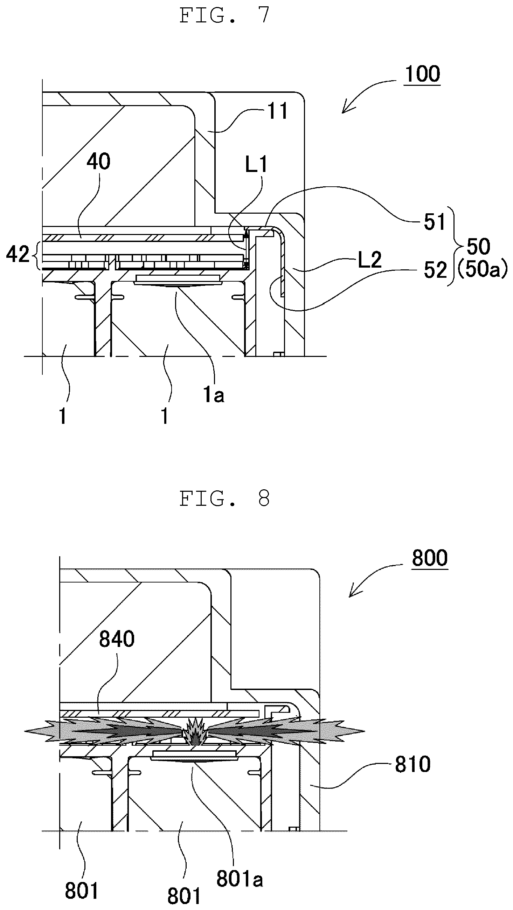

For example, in battery pack 800 that includes outer covering case 810 formed of resin as illustrated in the schematic cross-sectional view in FIG. 8, heat-resistant plate 840, such as a metal plate, is disposed opposing the end faces of secondary battery cells 801. As a result, even if high-temperature and high-pressure gas is exhausted from safety valve 801a of secondary battery cell 801, heat-resistant plate 840 is capable of preventing the flame from penetrating outer covering case 810 formed of resin.

However, it was found that when the high-temperature and high-pressure flame ejected from the end face of secondary battery cell 801 is blocked by heat-resistant plate 840 and bounces off heat-resistant plate 840, the flame may change the traveling direction to the lateral side and travel straight, resulting in melting the lateral side of outer covering case 810 formed of resin and causing the flame to come out of outer covering case 810. In order to avoid such a situation, the entire outer covering case may be covered with a silica sheet or a heat-resistant metal case may be used for the outer covering case. However, this leads to an increase in cost, weight, and size.

### Citation List

### Patent Literature

[PTL 1] Japanese Unexamined Patent Application Publication No. 2021-174673

### SUMMARY OF THE INVENTION

### TECHNICAL PROBLEM

An object of the present disclosure is to provide a battery pack that prevents flame from coming out from the lateral side of an outer covering case.

### SOLUTION TO PROBLEM

A battery pack according to one aspect of the present invention includes: one or more secondary battery cells each of which includes an outer covering can that includes a portion including a safety valve; an outer covering case that is formed of resin and configured to house the one or more secondary battery cells, the outer covering case including a first face and a second face intersecting the first face; a heat-resistant plate that is disposed on an inner side of the first face of the outer covering case to oppose the safety valve of each of the one or more secondary battery cells; and a bent piece that includes a first piece and a second piece that is connected to the first piece. The second piece is bent relative to the first piece. In a state where the bent piece is disposed at an end portion of the heat-resistant plate, the first piece opposes the first face and the second piece opposes the second face.

### ADVANTAGEOUS EFFECTS OF INVENTION

In a battery pack according to one aspect of the present invention, bent pieces are disposed on the inner side of the outer covering case. Each of the bent pieces is bent from the first face to the second face of the outer covering case. With this, in case high-pressure gas is released from the safety valve into the outer covering case, and even when the gas bounces off the heat-resistant plate disposed on the first face and heads toward the second face, it is possible to protect the lateral side of the outer covering case by the bent piece, preventing the flame from coming out of the outer covering case.

### BRIEF DESCRIPTION OF THE DRAWINGS

[FIG. 1] FIG. 1 is a perspective view of a battery pack according to Embodiment 1.
[FIG. 2] FIG. 2 is a longitudinal cross-sectional view taken along line II-II in FIG. 1.
[FIG. 3] FIG. 3 is a transverse cross-sectional view taken along line III-III in FIG. 1.
[FIG. 4] FIG. 4 is a transverse cross-sectional view taken along line IV-IV in FIG. 1.
[FIG. 5] FIG. 5 is an exploded perspective view of the battery pack illustrated in FIG. 1.
[FIG. 6] FIG. 6 is an exploded perspective view of the battery pack illustrated in FIG. 5 seen from diagonally downward on the rear side.
[FIG. 7] FIG. 7 is an enlarged cross-sectional view of main portions in FIG. 3.
[FIG. 8] FIG. 8 is a schematic cross-sectional view illustrating a state in which flame comes out of a battery pack according to a comparative example.
[FIG. 9] FIG. 9 is a schematic cross-sectional view illustrating a state in which flame is prevented from coming out of the battery pack according to Embodiment 1.
[FIG. 10] FIG. 10 is an exploded perspective view illustrating a state in which bent pieces are disposed on an inner side of an upper case in FIG. 6.
[FIG. 11] FIG. 11 is an enlarged cross-sectional view of main portions of a battery pack according to Embodiment 2.
[FIG. 12] FIG. 12 is an enlarged cross-sectional view of main portions of a battery pack according to Embodiment 3.
[FIG. 13] FIG. 13 is an enlarged cross-sectional view of main portions of a battery pack according to Embodiment 4.

### DESCRIPTION OF EMBODIMENTS

Aspects of the present invention may be specified by the following configuration and features.

In a battery pack according to another aspect of the present invention, in the aspect, the outer covering case includes an outer shape that is in a shape of a rectangle.

The bent piece protects a corner portion of the rectangle of the outer covering case.

Moreover, in a battery pack according to another aspect of the present invention, in any one of the aspects, the bent piece is formed of a meal plate bent in an L-shape.

Moreover, in a battery pack according to another aspect of the present invention, in any one of the aspects, the first piece and the second piece of the bent piece are integrally formed.

Moreover, in a battery pack according to another aspect of the present invention, in any one of the aspects, on the inner side of the first face of the outer covering case, a plane on which the safety valve of each of the one or more secondary battery cells is disposed and the heat-resistant plate are spaced apart to define a gas exhaust space.

A length of the second piece is longer than a height of the gas exhaust space. With above configuration, the bent piece is longer than the height of the gas discharge space provided between the end face of the secondary battery cell and the heat-resistant plate. This provides the advantage of reliable protection of the lateral faces of the outer covering case formed of resin.

Moreover, in a battery pack according to another aspect of the present invention, in any one of the aspects, the outer covering case includes an inner surface that includes one or more protrusions.

The bent piece includes a surface that includes one or more recesses that correspond to the one or more protrusions.

Moreover, in a battery pack according to another aspect of the present invention, in any one of the aspects, the first piece and the second piece of the bent piece are continuously formed in a curved manner. This configuration is expected to relieve gas pressure and impact by guiding the high-temperature and high-pressure gas from the first face to the second face along the curved surface.

Moreover, in a battery pack according to another aspect of the present invention, in any one of the aspects, the bent piece is integrally formed with the end portion of the heat-resistant plate.

Hereinafter, embodiments of the present invention will be described with reference to the drawings. Note that the following embodiments are examples for embodying the technical idea of the present invention, and are not intended to limit the present invention to the following description. Moreover, the specification of the present invention does not limit the members in the claims to the members in the embodiments. **In** particular, dimensions, materials, shapes, relative arrangement and the like of the structural elements described in the embodiments are not intended to restrict the scope of the present invention thereto, but are mere explanatory examples, unless particularly specifically described. It is to be noted that sizes, positional relations and the like of the members illustrated in each drawing may be exaggerated for clarifying a description. Moreover, in the following description, the same name or symbol denotes the same member or members of the same quality, and a detailed description thereof will be omitted as appropriate. Moreover, each element constituting the present invention may have a mode where a plurality of elements are made of the same member and the one member serves as the plurality of elements, or conversely, a function of one member can be shared and realized by a plurality of members.

The battery pack according to the present invention can be used as a power source for driving autonomous mobile robots for delivery, electric carts for delivery or golf courses, electric scooters, construction machinery, and vehicles such as hybrid cars, and electric cars. The battery pack can also be used for power sources for driving assisted bicycles as well as power sources for portable electrical devices, such as wireless devices, electric cleaners, and power tools. Alternatively, the battery pack can be used as backup power sources for servers in stationary energy storage applications, or as power supply devices for homes, businesses, and factories. Hereinafter, a battery pack used as a power source for driving an autonomous mobile robot will be described as an embodiment of the present invention.

### [Embodiment 1]

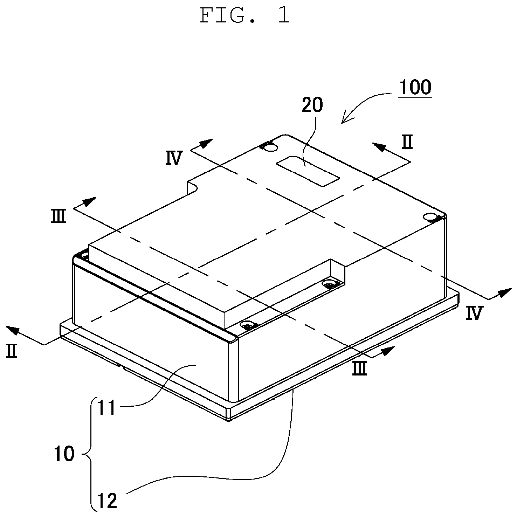

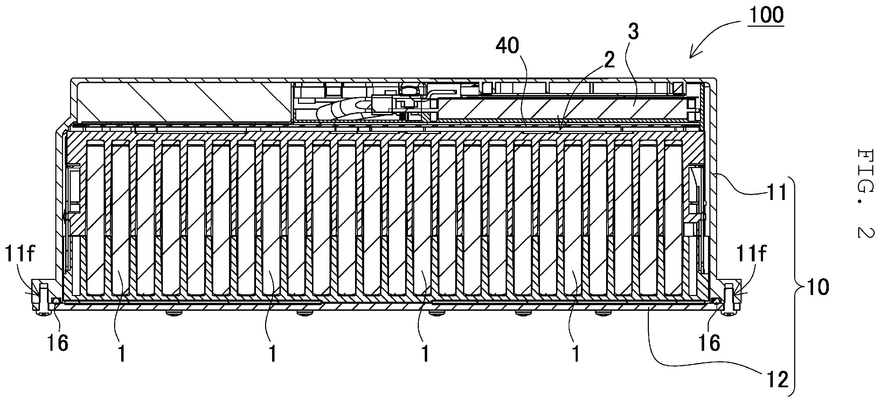

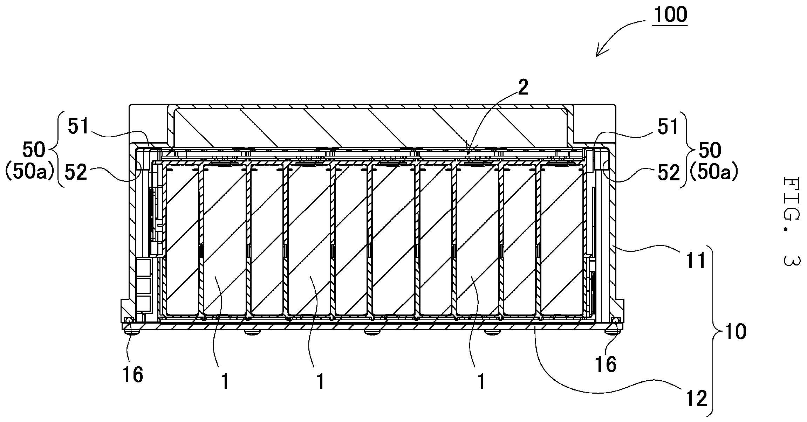

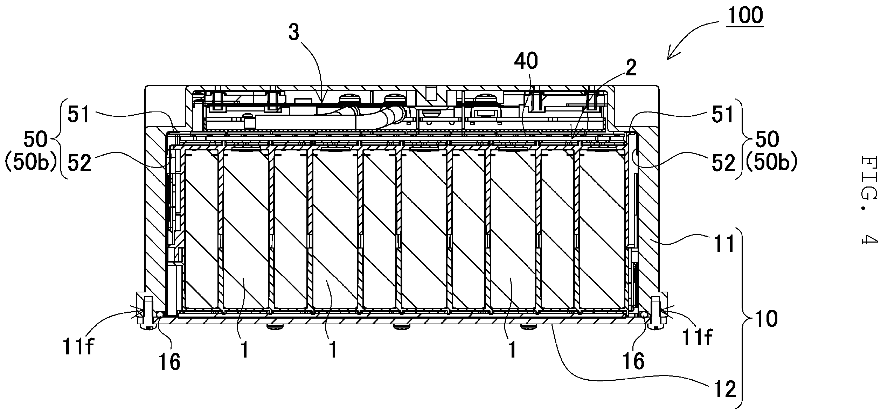

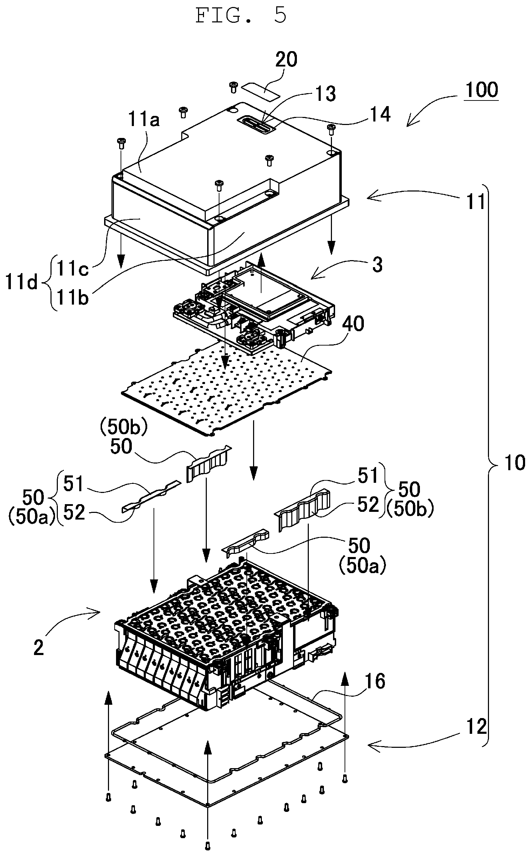

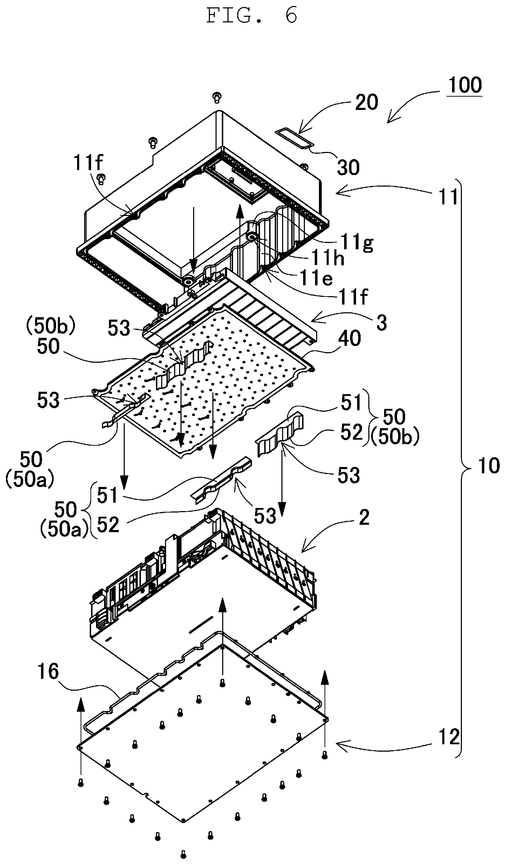

FIG. 1 to FIG. 7 illustrate battery pack 100 according to Embodiment 1 of the present invention. Specifically, FIG. 1 is a perspective view of battery pack 100 according to Embodiment 1, FIG. 2 is a longitudinal cross-sectional view taken along line II-II in FIG. 1, FIG. 3 is a transverse cross-sectional view taken along line III-III in FIG. 1, FIG. 4 is a transverse cross-sectional view taken along line IV-IV in FIG. 1, FIG. 5 is an exploded perspective view of battery pack 100 illustrated in FIG. 1, FIG. 6 is an exploded perspective view of battery pack 100 illustrated in FIG. 5 seen from diagonally downward on the rear side, and FIG. 7 is an enlarged cross-sectional view of main portions in FIG. 3. Battery pack 100 illustrated in FIG. 1 to FIG. 7 includes outer covering case 10, label 20, and one or more secondary battery cells 1.

### (Outer Covering Case 10)

Outer covering case 10 houses battery module 2 that includes one or more secondary battery cells 1, and circuit board 3. Outer covering case 10 is shaped in a rectangular box in a plan view in appearance extending in one direction as illustrated in, for example, FIG. 1 to FIG. 6. Box-shaped outer covering case 10 includes a first face and a second face that intersects the first face. In the example in FIG. 1, the top face serves as the first face and the lateral face along the longitudinal direction serves as the second face. As illustrated in FIG. 2 to FIG. 6, for example, outer covering case 10 includes a housing space for housing battery module 2 and circuit board 3.

Outer covering case 10 is divided into two parts that are upper case 11 and lower case 12, for example, as illustrated in FIG. 5 and FIG. 6. The corner portions of divided upper case 11 and lower case 12 are fixed to each other by screwing, fitting, adhesive bonding, ultrasonic welding, or the like. In the example of FIG. 6, upper case 11 and lower case 12 are screwed together, and O-ring 16 is interposed between upper case 11 and lower case 12 to provide waterproof performance. Moreover, in the example of FIG. 6, upper case 11 is in a shape of a box with an open bottom, and lower case 12 is a plate-shaped bottom plate. Upper case 11 includes top plate 11a, lateral plates 11b each connected to the longer periphery of top plate 11a, and end plates 11c each connected to the shorter periphery of top plate 11a. The inner face of top plate 11a defines the first face. The inner wall of each lateral plate 11b defines the second face. A pair of lateral plates 11b and a pair of end plates 11c define lateral walls 11d of outer covering case 10. Top plate 11a and lateral walls 11d of upper case 11 may be integrally formed, or may be separate members. For example, the lateral walls may be in a shape of a frame that is open at the top and bottom, and the frame shaped lateral walls may be fixed to the top plate. Top plate 11a partially includes a protrusion in which circuit board 3 is housed.

Lateral plate 11b includes a plurality of ribs 11e that are spaced apart from one another. Each of ribs 11e extends along the thickness direction of upper case 11, and contributes to reinforcement of upper case 11. Although ribs 11e are not provided on end plate 11c in FIG. 1 and the like, ribs may be, of course, added to the end plate. Each rib 11e includes an end face that includes screw hole 11f for fixing lower case 12, as illustrated in FIG. 6.

As illustrated in FIG. 5 and FIG. 6, for example, rectangular upper case 11 further includes six bosses 11g with screw holes 11h for fixing battery module 2 at the corner portions of upper case 11 and at the middle positions of the longer sides of upper case 11.

Outer covering case 10 is preferably made of a material with excellent insulation properties, for example, polycarbonate, or PC-ABS alloy.

### (Secondary Battery Cell 1)

Each of one or more secondary battery cells 1 may be a secondary battery cell with a prismatic or cylindrical outer covering can. In the example illustrated in FIG. 2 and FIG. 3, 120 cylindrical secondary battery cells 1 are arranged in a vertical position. Ten secondary battery cells 1 are connected in series and twelve secondary battery cells are connected in parallel. The number and arrangement of the secondary battery cells and the number of series and parallel connections are not limited to this example, and any number and arrangement can be adopted as appropriate. Each secondary battery cell 1 includes positive and negative electrodes. The positive and negative electrodes are preferably provided on different end faces of secondary battery cell 1. Known secondary batteries, such as lithium-ion secondary batteries, nickel metal hydride batteries, nickel cadmium batteries, or the like, can be appropriately used for secondary battery cells 1.

The outer covering can of secondary battery cell 1 includes safety valve 1a, as illustrated in FIG. 7 and the like. Safety valve 1a opens in response to an increase in the internal pressure of the outer covering can to release the gas inside the outer covering can to the outside.

Battery module 2 includes a battery holder that houses a plurality of secondary battery cells 1. The battery holder includes a plurality of storage cylinders that house individual secondary battery cells 1. Such a battery holder can be made of polycarbonate or the like with excellent insulation properties.

### (Circuit Board 3)

Battery module 2 is connected to circuit board 3 via lead plates. On circuit board 3, a charging and discharging circuit that charge and discharge secondary battery cells 1, a protection circuit that monitors the voltage and temperature of secondary battery cells 1 and shuts off the current in the event of an abnormality and the like are mounted. Circuit board 3 is made of, for example, a glass epoxy board.

### (Exhaust Hole 13)

As illustrated in FIG. 5, outer covering case 10 includes a portion in which exhaust hole 13 is provided to release high-pressure gas to the outside when the safety valve of secondary battery cell 1 is opened and the high-pressure gas is exhausted. Here, exhaust hole 13 is provided in label attachment region 14 to which label 20 is attached. Label 20 is attached to label attachment region 14 to close exhaust hole 13. Exhaust hole 13 is shifted in position to one side (rear side in FIG. 5) on the upper surface of outer covering case 10. The position of exhaust hole 13 is not limited to the upper surface of outer covering case 10, but may also be provided on the lateral or bottom surface of outer covering case 10. A plurality of exhaust holes 13 may be provided at a plurality of positions. Exhaust hole 13 is designed according to the volume of outer covering case 10 and the battery capacity of secondary battery cell 1, and is, for example, 12 mm in width.

### (Label 20)

Label 20 is adhered to the peripheral edge of exhaust hole 13 of outer covering case 10 and attached to label attachment region 14 of outer covering case 10. Label attachment region 14 is disposed on recessed portion 15 that is recessed compared with the other regions of outer covering case 10 so that label attachment region 14 is almost flush with the surface of label 20. Information on the specifications of battery pack 100, such as model number, manufacturer name, battery capacity, and rating, is pre-printed on Label 20. Label 20 is made of resin, such as polycarbonate or polypropylene, or is a paper based material impregnated or coated with resin. The outer shape of label 20 is rectangle. In the example in FIG. 5 and the like, the shape of label 20 is a horizontal rectangle with corners rounded, but the shape can be a vertical rectangle, a square, or a polygonal shape such as an octagonal shape.

### (Double-Sided Tape 30)

In order to attach label 20, the back side of label 20 at least partially includes an adhesive surface. Preferably, as illustrated in FIG. 6, double-sided tape 30 is attached around label 20 to attach the adhesive surface to label 20. Double-sided tape 30 is a member for fixing label 20 at position at which exhaust hole 13 is closed. For example, the thickness of label 20 is 0.5 mm, and the thickness of double-sided tape 30 is 0.2 mm. An adhesive agent or the like may be used to adhere label 20, in place of double-sided tape 30.

### (Heat-Resistant Plate 40)

Battery pack 100 also includes heat-resistant plate 40. Heat-resistant plate 40 is configured to be disposed on the inner side of the first face of outer covering case 10 to oppose the safety valve of each secondary battery cell 1. Heat-resistant plate 40 is in a shape of a plate that covers the end faces of a plurality of secondary battery cell 1 when secondary battery cells 1 are aligned. In the examples shown in the cross-sectional views in FIG. 4 and FIG. 7, heat-resistant plate 40 is disposed below circuit board 3. However, the present disclosure is not limited to such a configuration. For example, the bottom surface of a board holder that holds the circuit board may also serve as a heat-resistant plate. Such heat-resistant plate 40 is made of a material such as mica or ceramics having heat resistance properties.

### (Bent Piece 50)

Battery pack 100 further includes bent pieces 50 at the end portions of heat-resistant plate 40. Each of bent pieces 50 includes first piece 51 and second piece 52 that is connected to first piece 51. Bent piece 50 is disposed on the inner side of outer covering case 10 such that first piece 51 opposes the first face, and second piece 52 opposes the second face. First piece 51 and second piece 52 are preferably integrally formed. Here, first piece 51 and second piece 52 of bent piece 50 are bent along the first face and the second face. The first piece and the second piece of the bent piece may be separate components and the second piece may be joined to the first piece.

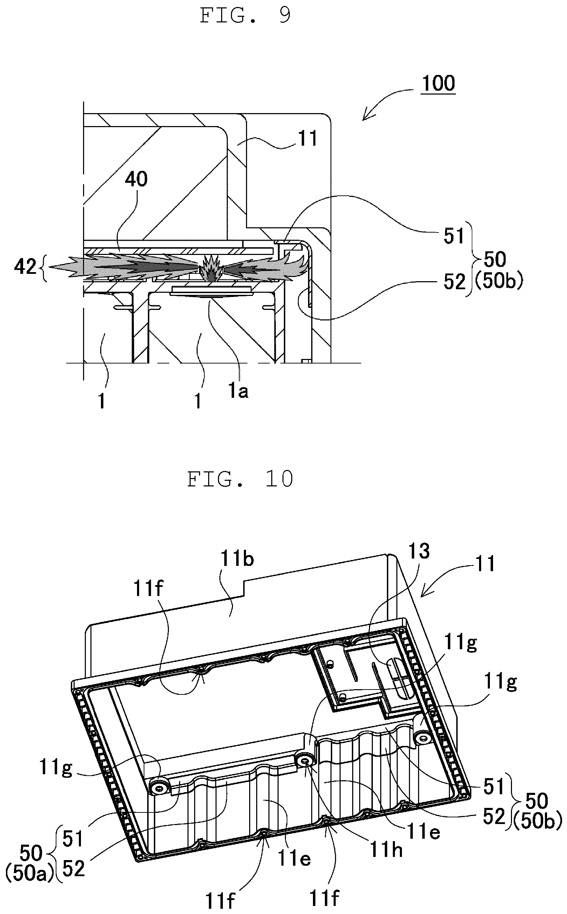

Bent piece 50 is made of a heat-resistant member. With this configuration, even when high-temperature and high-pressure gas is released from the safety valve, bounces off heat-resistant plate 40 disposed on the first face and heads toward the second face, bent portion 50 protects the lateral side of outer covering case 10, preventing flame from coming out of outer covering case 10. This state will be described with reference to FIG. 8 and FIG. 9.

In battery pack 800 according to a comparative example illustrated in FIG. 8, heat-resistant plate 840 is disposed to cover the end faces of secondary battery cells 801. By doing so, even when high-temperature and high-pressure gas is exhausted from safety valve 801a disposed on the end face of secondary battery cell 801, heat-resistant plate 840 prevents flame from coming out of the top face of outer covering case 810. However, the inventors of the present application have found the following point through the experiments. The high-temperature and high-pressure gas discharged from the end face of secondary battery cell 801 is blocked by heat-resistant plate 840. As a result, the gas that is prevented from traveling upward travels laterally and collides with the lateral face of outer covering case 810. If the gas ignites and flame is generated, the flame may melt the lateral face of outer covering case 810, causing the flame to come out of outer covering case 810. In order to avoid such a situation, the heat resistance of outer covering case 810 may be increased, for example, by using metal for the material of outer covering case 810 instead of resin or by covering outer covering case 810 with a silica flame-resistant sheet. However, these methods lead to an increase in cost, weight, and size.

In contrast, in battery pack 100 according to the present embodiment, as illustrated in FIG. 7, bent piece 50 is disposed which is bent along the first face and the second face of outer covering case 10. With this, as illustrated in the schematic cross-sectional view in FIG. 9, even when high-temperature and high-pressure gas is ejected from safety valve 1a of secondary battery cell 1, second piece 52 protects lateral plate 11b of outer covering case 10 from the high-temperature and high-pressure gas and flame blocked by heat-resistant plate 40 and traveling laterally, preventing the flame from coming out from this portion. This effectively covers the portions of outer covering case 10 that may be exposed to the high-temperature and high-pressure gas without making entire outer covering case 10 heat-resistant, leading to a decrease in cost and weight of the members.

Such bent piece 50 is made of a heat-resistant member, such as a metal plate, mica, or ceramics. Preferably, bent piece 50 is formed by bending a metal plate into an L-shape.

In the example of FIG. 7 and the like, on the inner side of the first face of outer covering case 10, the plane on which safety valve 1a of secondary battery cell 1 is disposed and heat-resistant plate 40 are spaced apart to define gas exhaust space 42. In this state, length L2 of second piece 52 of bent piece 50 is preferably longer than height L1 of gas exhaust space 42. This configuration is capable of reliably protecting the lateral sides of outer covering case 10.

In the examples illustrated in FIG. 7, FIG. 10, and the like, each bent piece 50 is disposed on the inner side of outer covering case 10 to cover the corner portion that is the boundary between top plate 11a and lateral plate 11b. With this, the corner portions inside outer covering case 10 are reinforced with bent pieces 50, preventing the high-temperature and high-pressure gas and flame from concentrating on and breaking the corner portions.

In the examples illustrated in FIG. 6 and FIG. 10, upper case 11 includes a level difference. Therefore, the height of the corner portions on the front side is different from the height of the corner portions on the rear side. Therefore, the height of bent piece 50 on the front side is also different from the height of bent piece 50 on the rear side in accordance with the level difference of upper case 11. As described above, the lower end of second piece 52 covers gas exhaust space 42, and the length of the second piece 52 is longer than the height of gas discharge space 42. Gas exhaust space 42 is defined by the end face of each secondary battery cell 1. Moreover, in FIG. 5 and the like, the heights of the end faces of all secondary battery cells 1 are identical to each other. Accordingly, the height of the lower ends of second pieces 52 of bent pieces 50 are also identical to each other. On the other hand, as for the height of the upper end of each second piece 52, as described above, the portion of upper case 11 on the rear side protrudes, and the height of the corner portions each serving as the boundary between the first face and the second face also differ accordingly. Therefore, as a result of designing the length of second piece 52 in accordance with the height of the corner portion, bent piece 50a disposed on the front side has a low profile and bent piece 50b disposed on the rear side has a high profile.

Battery pack 100 includes a gas guide path inside outer covering case 10 for guiding the gas exhausted from the safety valve of secondary battery cell 1 to gas exhaust hole 13. Bent piece 50 can also be used to define the gas guide path.

In addition, the inner surface of outer covering case 10 may include one or more protrusions. By providing the recesses on bent piece 50 corresponding to the protrusions, bent piece 50 can be closely attached to the inner surface of outer covering case 10 with protrusions, providing reliable protection. In the examples of FIG. 6, FIG. 10, and the like, the inner surface of upper case 11 includes a plurality of ribs 11e. Second piece 52 of bent piece 50 includes recesses 53 corresponding to ribs 11e. This allows bent piece 50 to be closely attached to the inner surface of outer covering case 10. In addition, recesses 53 also achieves the positioning of bent piece 50 on the inner side of outer covering case 10. It also provides the advantage of increasing the physical strength of bent piece 50. In addition, the formation of unevenness on the surface of bent piece 50, which is exposed to the high-temperature and high-pressure gas, is expected to cause gas pressure loss, thereby reducing the pressure.

In the above example, second piece 52 of bent piece 50 includes recesses 53. However, of course, the first piece may include recesses in accordance with the shape of the outer covering case. Not only the recesses, but also any shape, such as protrusions, can be adopted to the bent piece in accordance with the shape of the outer covering case.

### [Embodiment 2]

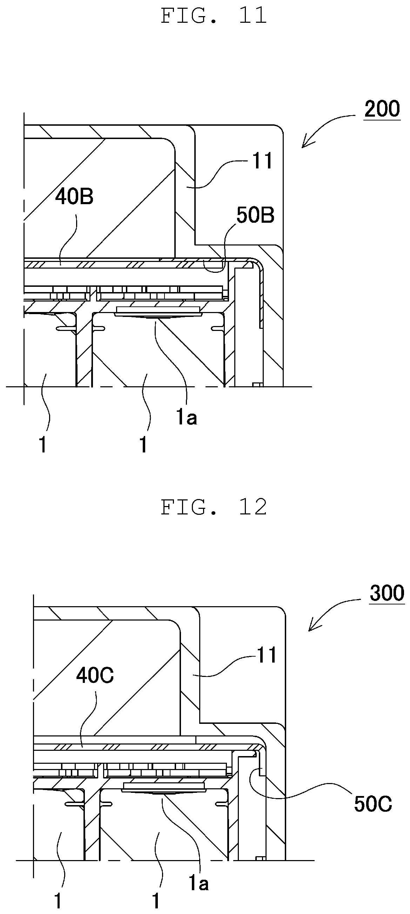

In the above example of FIG. 3 and the like, bent pieces 50 are disposed at the end portions of heat-resistant plate 40, while a gap is provided between heat-resistant plate 40 and each bent piece 50. However, the present disclosure is not limited to such an example, and it may be that no gap is provided between heat-resistant plate 40B and each bent piece 50B, for example, as in battery pack 200 according to Embodiment 2 illustrated in FIG. 11. In FIG. 11, the same members as those in battery pack 100 according to Embodiment 1 described above will be marked with the same reference numerals, and detailed explanations thereof will be omitted as appropriate. This prevents the high-temperature and high-pressure gas from coming out from a portion between heat-resistant plate 40B and bent piece 50B.

### [Embodiment 3]

Moreover, the bent pieces may be formed integrally with the end portions of a heat-resistant plate. In other words, the bent portion may be provided as an integral part of the heat-resistant plate. FIG. 12 illustrates such an example as battery pack 300 according to Embodiment 3. In FIG. 12, the same members as those in the battery pack according to each of the embodiments described above will be marked with the same reference numerals, and detailed explanations thereof will be omitted as appropriate. This configuration completely eliminates the seam between heat-resistant plate 40C and bent piece 50C, preventing gas from coming out from this portion. Since bent piece 50C can be formed by bending the end portion of heat-resistant plate 40C, no separate member for the bent piece is required. This also leads to a reduction in manufacturing cost.

### [Embodiment 4]

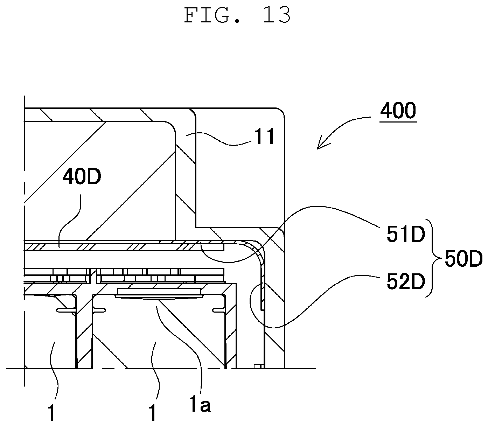

Moreover, first piece 51 and second piece 52 of bent piece 50 do not have to form a right angle, but may form a curve. FIG. 13 illustrates such an example as battery pack 400 according to Embodiment 4. In FIG. 13, the same members as those in the battery pack according to each of the embodiments described above will be marked with the same reference numerals, and detailed explanations thereof will be omitted as appropriate. Bent piece 50D illustrated in FIG. 13 is formed by connecting first piece 51D and second piece 52D in a curved manner, allowing curved bent piece 50D to be disposed from the first face to the second face on the inner side of outer covering case 10. With such a configuration, gas pressure and impact are expected to be relieved by guiding the high-temperature and high-pressure gas from the first face to the second face along the curved surface.

In the above example, bent piece 50 is disposed on the inner side of each of both lateral faces of outer covering case 10. In the example in FIG. 5, bent pieces 50 are disposed on the left and right sides of battery module 2. The present disclosure is not limited to this configuration. For example, the bent pieces may also be disposed on the front and rear sides of battery module 2 in FIG. 5. This reduces the risk of flame coming out of outer covering case 10 in the event of a thermal runaway of a secondary battery cell against all sides of outer covering case 10, including the front and rear sides.

In the above examples, the battery pack is mounted on an electrical device to be driven to supply power to the electrical device. In addition, when the remaining capacity of the battery pack becomes low or the battery pack deteriorates over time, the battery pack can be replaced and the electrical device can continuously be used. The present invention is not limited to a replaceable battery pack that mainly houses secondary battery cells, but can also be applied to a form in which secondary battery cells are housed in the housing of an electrical device. In the present disclosure, a battery pack can be any one in which secondary battery cells are housed in a case, and an electrical device that includes a housing in which secondary battery cells for driving are housed is also referred to as a battery pack. In other words, the present invention is not limited to replaceable battery packs, but can also be applied to electrical devices that include secondary battery cells.

### INDUSTRIAL APPLICABILITY

The battery packs according to the present invention can be preferably used for power sources for driving autonomous mobile robots for delivery, electric carts for delivery or golf courses, electric scooters, construction machinery, and vehicles, such as hybrid cars and electric cars. The battery packs can also be appropriately used for power sources for driving assisted bicycles as well as power sources for portable electrical devices such as wireless devices, electric cleaners, and power tools. The battery packs can also be appropriately used for backup power sources for servers in stationary energy storage applications, or as power supply devices for homes, businesses, and factories.

### REFERENCE MARKS IN THE DRAWINGS

- 100, 200, 300, 400: battery pack
- 1: secondary battery cell
- 1a: safety valve
- 2: battery module
- 3: circuit board
- 10: outer covering case
- 11: upper case
- 11a: top plate
- 11b: lateral plate
- 11c: end plate
- 11d: lateral wall
- 11e: rib
- 11f: screw hole
- 11g: boss
- 11h: screw hole
- 12: lower case
- 13: exhaust hole
- 14: label attachment region
- 16: O-ring
- 20: label
- 40, 40B, 40C, 40D: heat-resistant plate
- 42: gas exhaust space
- 50, 50B, 50C, 50D: bent piece
- 50a: bent piece disposed on the front side
- 50b: bent piece disposed on the rear side
- 51, 51D: first piece
- 52, 52D: second piece
- 53: recess
- 800: battery pack
- 801: secondary battery cell
- 801a: safety valve
- 810: outer covering case
- 840: heat-resistant plate
- L1: height of gas exhaust space
- L2: length of second piece

## Claims

1. A battery pack comprising:
one or more secondary battery cells each of which includes an outer covering can that includes a portion including a safety valve;
an outer covering case that is formed of resin and configured to house the one or more secondary battery cells, the outer covering case including a first face and a second face intersecting the first face;
a heat-resistant plate configured to be disposed on an inner side of the first face of the outer covering case to oppose the safety valve of each of the one or more secondary battery cells; and
a bent piece that includes a first piece and a second piece that is connected to the first piece,
wherein the second piece is bent relative to the first piece, and
in a state where the bent piece is disposed at an end portion of the heat-resistant plate, the first piece opposes the first face and the second piece opposes the second face.

2. The battery pack according to claim 1,
wherein the outer covering case includes an outer shape that is in a shape of a rectangle, and
the bent piece protects a corner portion of the rectangle of the outer covering case.

3. The battery pack according to claim 1,
wherein the bent piece is formed of a metal plate bent in an L-shape.

4. The battery pack according to claim 1,
wherein the first piece and the second piece of the bent piece are integrally formed.

5. The battery pack according to any one of claims 1 to 4,
wherein, on the inner side of the first face of the outer covering case, a plane on which the safety valve of each of the one or more secondary battery cells is disposed and the heat-resistant plate are spaced apart to define a gas exhaust space, and
a length of the second piece longer than a height of the gas exhaust space.

6. The battery pack according to any one of claims 1 to 4,
wherein the outer covering case includes an inner surface that includes one or more protrusions, and
the bent piece incudes a surface that includes one or more recesses that correspond to the one or more protrusions.

7. The battery pack according to any one of claims 1 to 4,
wherein the first piece and the second piece of the bent piece are continuously formed in a curved manner.

8. The battery pack according to any one of claims 1 to 4,
wherein the bent piece is integrally formed with the end portion of the heat-resistant plate.
